# EUROPÄISCHE PATENTANMELDUNG

(11) **EP 1 128 064 A2**
(43) Veröffentlichungstag der Anmeldung: **29.08.2001**
(21) Anmeldenummer: 01104635.6
(22) Anmeldetag: 23.02.2001
(51) Int. Cl.: F03D 7/02, F01D 7/00

(54) **Elektrische Verstellung der Anstellwinkel der Rotorblätter einer Windkraftanlage**

(30) Priorität: 28.02.2000 DE 10009472
(71) Anmelder: Hennchen, Norbert, 29664 Walsrode (DE)
(72) Erfinder: Hennchen, Norbert, 29664 Walsrode (DE)
(74) Vertreter: Braun, Dieter, Dipl.-Ing.

(57) **Zusammenfassung**

Beschrieben wird eine Vorrichtung zum Verstellen der Anstellwinkel der auf einer Nabe (3) einer Rotorwelle (2, 22) verdrehbar angeordneten Rotorblätter (4) einer Windkraftanlage (1) mittels Elektromotoren, wobei die Rotorblätter (4) durch Schließen eines in einem Notstromkreis (7, 12, 14) mit einer unabhängigen Energiequelle angeordneten Schützes (15) in ihre Fahnenstellung drehbar sind. Die Erfindung ist im wesentlichen dadurch gekennzeichnet, daß im Notstromkreis (7, 12, 14) als Energiequelle wenigstens ein der Rotorwelle (2, 22) zugeordneter Permanentmagnet-Generator (7) angeordnet ist und daß die Elektromotoren als Kurzschlußläufer (14) ausgebildet sind, wobei das Drehfeld des im Permanentmagnet-Generator (7) erzeugten Drehstromes derart mit den Kurzschlußläufern (14) verschaltet ist, daß diese die Rotorblätter (4) in ihre Fahnenstellung drehen (in Verbindung mit Figur 1).

## Beschreibung

Die Erfindung betrifft eine Vorrichtung zum Verstellen der Anstellwinkel der auf einer Nabe einer Rotorwelle verdrehbar angeordneten Rotorblätter einer Windkraftanlage mittels Elektromotoren, wobei die Rotorblätter durch Schließen eines in einem Notstromkreis mit einer unabhängigen Energiequelle angeordneten Schützes in ihre Fahnenstellung drehbar sind.

Bei modernen Windkraftanlagen wird der Anstellwinkel der Rotorblätter durch Elektromotoren verstellt, um die Drehzahl des Rotors in Abhängigkeit von der Windstärke zu regeln. Außerdem ist es möglich, die Windkraftanlage bei Störungen abzubremsen, indem die Rotorblätter von den Elektromotoren in ihre Fahnenstellung gebracht werden. Aus Sicherheitsgründen verfügt hier jedes einzelne Rotorblatt über einen eigenen Verstellantrieb, so daß eine hinreichende Drehzahlbegrenzung auch dann erzielbar ist, wenn ein Verstellantrieb ausfallen sollte. Da es grundsätzlich auch bei einem Ausfall des Stromnetzes möglich sein muß, die Rotorblätter in ihre Fahnenstellung zu bringen, sind den Elektromotoren Notstromkreise zugeordnet, die im Störfall über ein Schütz aktiviert werden.

In den Notstromkreisen sind als Energiequelle Akkumulatoren angeordnet. Im Notfall wird dann der Akkumulator über das Schütz so lange mit dem Elektromotor, der als mechanisch kommutierter Gleichstrommotor ausgebildet ist, verbunden, bis sich die Rotorblätter in ihrer sicheren Position, d. h. in ihrer Fahnenstellung, befinden. Grundsätzlich ist es erforderlich, daß das Verstellsystem elektrisch möglichst einfach und unempfindlich gegen Störungen aufgebaut ist. Man verzichtet dabei soweit wie möglich auf den Einsatz von elektronischen Bauteilen, da Windkraftanlagen in hohem Maße der Gefahr von Blitzeinschlägen ausgesetzt sind und elektronische Bauteile auf Überspannungen sehr empfindlich reagieren und leicht zerstört werden.

Bei den bekannten Systemen ist es außerdem nachteilig, daß sowohl die Batterien bzw. Akkumulatoren, als auch die mechanisch kommutierten Gleichstrommotoren sehr wartungsintensiv sind. Beim Einschalten der Gleichstrommotoren entstehen zudem sehr hohe Ströme und Drehmomente. Deshalb müssen sowohl die elektrischen, als auch die mechanischen Komponenten für diesen Betriebsfall ausgelegt werden. Insbesondere ist auch der Aufwand für das Schalten der Batteriegleichspannung an den induktiven Gleichstrommotor hoch. Zudem drehen sich die Rotorblätter je nach Ladezustand der Batterien und der Reibung in den Lagern der Rotorblätter mit unterschiedlicher Geschwindigkeit, was zu einem aerodynamischen Ungleichgewicht führen und die Windkraftanlage mechanisch stark belasten kann.

Der Erfindung liegt die Aufgabe zugrunde, eine wartungsarme Vorrichtung der genannten Gattung zu schaffen, die sich zudem durch einen einfachen Aufbau und eine sehr hohe Betriebssicherheit auszeichnet.

Diese Aufgabe wird erfindungsgemäß durch die Merkmale des Anspruchs 1 gelöst. Die weitere Ausgestaltung der Erfindung ist den Unteransprüchen zu entnehmen.

Erfindungsgemäß ist es vorgesehen, daß im Notstromkreis als Energiequelle wenigstens ein der Rotorwelle zugeordneter Permanentmagnet-Generator angeordnet ist, und daß die Elektromotoren als Kurzschlußläufer ausgebildet sind, wobei das Drehfeld des im Permanentmagnet-Generator erzeugten Drehstromes derart mit den Kurzschlußläufern verschaltet ist, daß diese die Rotorblätter in ihre Fahnenstellung drehen. Bei beiden Komponenten handelt es sich um sehr robuste und daher wartungsarme Bauteile, die zudem unempfindlich gegen von außen einwirkende Störungen, wie Blitzeinschläge, sind.

Vorzugsweise ist jedem Kurzschlußläufer ein separater Notstromkreis zugeordnet, so daß auch bei Ausfall eines Notstromkreises zumindest eine deutliche Drehzahlbegrenzung des Rotors erzielbar ist.

Im Rahmen der Erfindung ist es weiterhin vorgesehen, daß der Permanentmagnet-Generator eine mit der Rotorwelle rotierende Drehstromwicklung aufweist, um die in einem Stator ringförmig Permanentmagneten angeordnet sind. Es ist so möglich, die elektrischen Leitungen des Notstromkreises auf sehr einfache Weise durch eine Längsbohrung in der Rotorwelle an die in der Nabe angeordneten Kurzschlußläufer der Rotorblätter zu führen.

Vorteilhaft kann es sein, wenn der Stator des Permanentmagnet-Generators drehbar angeordnet und über ein Getriebe mit der Rotorwelle verbunden ist, derart, daß der Stator eine Rotationsbewegung ausführt und die Geschwindigkeit der Relativbewegung der Drehstromwicklung zu den Permanentmagneten erhöht wird. Es ist so erreichbar, daß die Permanentmagneten des Stators mit einer der Getriebeübersetzung entsprechendem Vielfachen um die auf der Rotorwelle angeordnete Drehstromwicklung rotieren, wodurch sich eine größere elektrische Leistung erzielen läßt.

Auch kann es vorgesehen sein, daß der Permanentmagnet-Generator in der Nabe der Rotorwelle angeordnet ist. Es ist so eine kleine Baulänge erzielbar, und der Permanentmagnet-Generator ist in unmittelbarer Nähe der im Notbetrieb die Rotorblätter verdrehenden Kurzschlußläufer angeordnet. Vorzugsweise ist dann die Drehstromwicklung des Permanentmagnet-Generators zentrisch in der Nabe der Rotorwelle mit dieser umlaufend angeordnet und der Stator in der Nabe auf einer durch eine als Hohlwelle ausgebildeten Rotorwelle hindurchgeführten Hilfswelle angeordnet, die an ihrem freien Ende drehfest gehalten ist. Selbstverständlich können in der Nabe, entsprechend der Anzahl der Rotorblätter, auch zwei oder mehr Permanentmagnet-Generatoren angeordnet sein.

In der Zeichnung sind Ausführungsbeispiele der Erfindung dargestellt und werden im Folgenden näher beschrieben. Es zeigen:
Figur 1, eine schematische Darstellung einer Vorrichtung mit zwei Permanentmagnet-Generatoren;
Figur 2, einen Permanentmagnet-Generator gemäß Figur 1, in schematischer Darstellung im Querschnitt;
Figur 3, eine Vorrichtung, bei der der Stator des Permanentmagnet-Generators über ein Getriebe von der Rotorwelle angetrieben ist;
Figur 4, eine Vorrichtung, bei der der Permanentmagnet-Generator in der Nabe der Windkraftanlage angeordnet ist.

In der Zeichnung ist mit 1 eine Windkraftanlage bezeichnet, auf deren Rotorwelle 2 eine Nabe 3 mit zwei Rotorblättern 4 angeordnet ist. Die Rotorwelle 2 ist in der in der Zeichnung nicht dargestellten Gondel der Windkraftanlage 1 in einem Lager 5 und einem Getriebe 6 drehbar gelagert und gehalten. Über das Getriebe 6 wird ein in der Zeichnung nicht dargestellter Generator für die Stromerzeugung angetrieben.

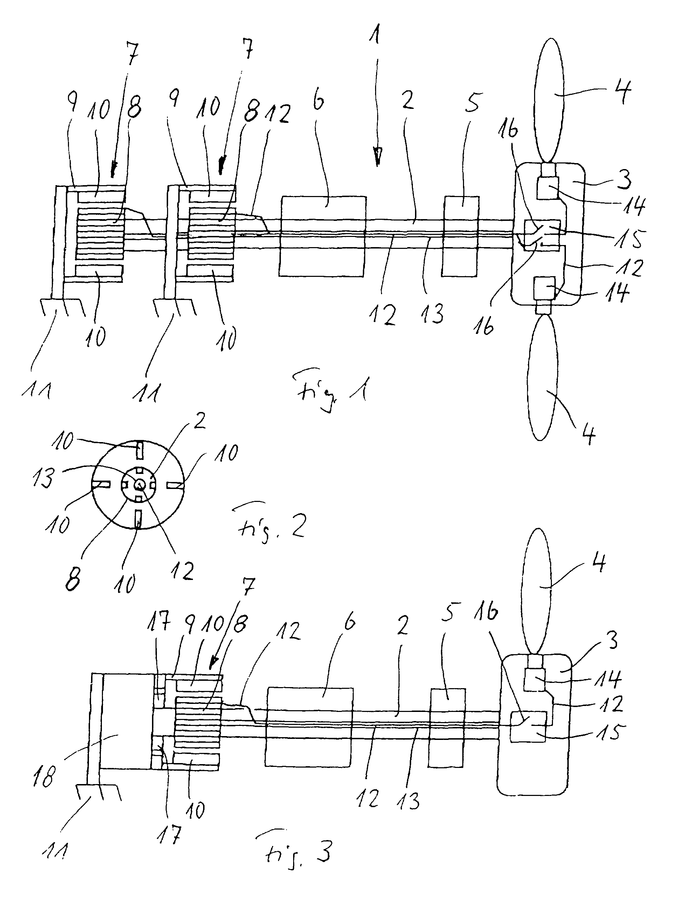

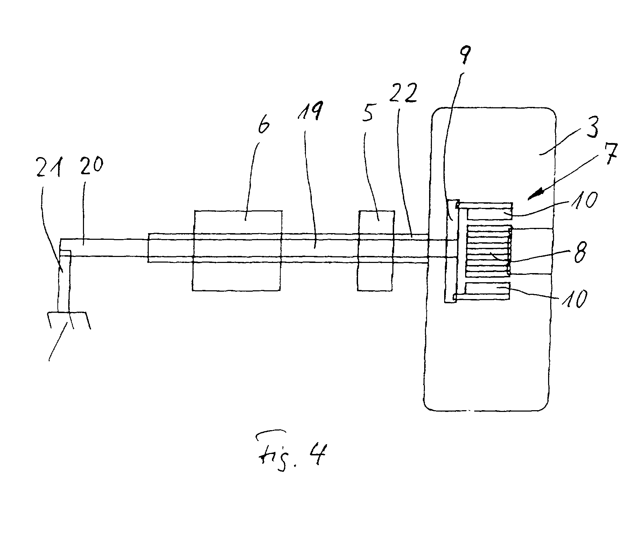

Am hinteren Ende der Rotorwelle 2 sind zwei Permanentmagnet-Generatoren 7 angeordnet, deren Drehstromwicklung 8 auf der Rotorwelle drehfest angeordnet ist und an deren Stator 9 Permanentmagneten 10 angeordnet sind, die die Drehstromwicklung 8, wie aus Figur 2 ersichtlich, ringförmig umschließen. Der Stator 9 der Permanentmagnet-Generatoren 7 ist über eine Halterung 11 an der Gondel der Windkraftanlage 1 befestigt.

Die Drehstromwicklungen 8 der Permanentmagnet-Generatoren 7 sind als Energiequelle zweier Notstromkreise über elektrische Leitungen 12, die durch eine zentrale Bohrung der Rotorwelle 2 hindurchgeführt sind, mit zwei in der Nabe 3 angeordneten Elektromotoren verbunden, die als Kurzschlußläufer 14 ausgebildet sind. Mittels der Kurzschlußläufer 14, die mit den Rotorblättern 4 in mechanischer Wirkverbindung stehen, sind die Anstellwinkel der Rotorblätter 4 verstellbar. In den elektrischen Leitungen 12 ist zwischen den Drehstromwicklungen 8 und den Kurzschlußläufern 14 je ein Schütz 15 angeordnet.

Bei Betrieb der Windkraftanlage 1 wird in der im Magnetfeld der drehfest angeordneten Permanentmagneten 7 rotierenden Drehstromwicklung 8 des Permanentmagnet-Generators 7 ein Drehstrom erzeugt. Da die Drehstromwicklungen 8 der beiden Permanentmagnet-Generatoren 7 jeweils über die elektrischen Leitungen 12 mit einem der Kurzschlußläufer 14 verbunden sind, ist ein Notstromkreis gebildet, der über das Schütz 15 aktivierbar ist. Das Schütz 15 weist eine der Phasenzahl des Drehstroms entsprechende Anzahl an Öffner-Kontakten 16 auf.

Sobald das Schütz 15 geschlossen wird, drehen die den Rotorblättern 4 zugeordneten Kurzschlußläufer 14 diese in ihre Fahnenstellung. Das Drehfeld des im Permanentmagnet-Generator 7 erzeugten Drehstromes ist dabei derart mit den Kurzschlußläufern 14 verschaltet, daß die Verdrehung der Rotorblätter 4 zwangsläufig in der Richtung auf die Fahnenstellung erfolgt.

Die Erfindung zeichnet sich im übrigen auch dadurch aus, daß die beim Einschalten des Notstromkreises plötzlich einwirkenden mechanischen Kräfte in vorteilhafter Weise über das Kippmoment der Kurzschlußläufer 14 begrenzt werden. Zusätzlicher Bauteile bedarf es hier nicht. Die Drehzahl/Frequenz/Spannungs-Kennlinie der Permanentmagnet-Generatoren 7 bewirkt zudem, daß die Kurzschlußläufer 14 die Rotorblätter 4 mit konstantem Drehmoment verdrehen. Dabei ist die Verfahrgeschwindigkeit der Rotorblätter 4, vorgegeben vom im Permanentmagnet-Generator 7 erzeugten Drehfeld, in vorteilhafter Weise abhängig von der Drehzahl der Rotorwelle 2. Bei hohen Drehzahlen der Rotorwelle 2 ist auch die Verfahrgeschwindigkeit der Rotorblätter 4 groß, so daß die Windkraftanlage 1 im Notfall auch dann schnell auf eine sichere Drehzahl abgebremst wird. Kommt die Drehbewegung der Rotorwelle 2 der Windkraftanlage 1 zum Stillstand, so bleiben selbsttätig auch die Kurzschlußläufer 14 stehen. Zusätzliche Abschaltmittel sind nicht erforderlich.

Entsprechend der Anzahl der Rotorblätter 4 mit ihrem zugeordneten Kurzschlußläufer 14 sind auf der Rotorwelle 2 in gleicher Anzahl Permanentmagnet-Generatoren 7 angeordnet. Durch die elektrischen Eigenschaften der Kurzschlußläufer 14 ist eine synchrone Verstellung aller Rotorblätter gewährleistet. Gegebenenfalls ist es natürlich auch möglich, zwei oder auch mehrere Kurzschlußläufer 14 über einen einzigen Permanentmagnet-Generator 7 anzutreiben.

In der Figur 3 ist eine Windkraftanlage 1 dargestellt, deren Nabe 3 ein Rotorblatt 4 aufweist. Der Stator 9 des Permanentmagnet-Generators 7 ist hier auf einem Kugellager 17 drehbar auf der Rotorwelle 2 gelagert. Am rückseitigen Ende der Rotorwelle 2 ist ein Getriebe 18 angeordnet, über das der Stator 9 mit den Permanentmagneten 10 entsprechend der Übersetzung des Getriebes 18 zusätzlich in eine Rotationsbewegung versetzt wird. Hierdurch wird erreicht, daß die Permanentmagneten 10 mit einem der Getriebeübersetzung entsprechenden Vielfachen um die auf der Rotorwelle 2 angeordnete Drehstromwicklung 8 rotieren. Hierdurch läßt sich eine größere elektrische Leistung erzielen bzw. die Baugröße der Permanentmagnet-Generatoren 10 verkleinern. Selbstverständlich können auch hier, sofern an der Nabe 3 mehrere Rotorblätter 4 angeordnet sind, auf der Rotorwelle 2 zugeordnete Permanentmagnet-Generatoren 7 mit einem im Stator 9 vorgeschaltenen Getriebe 18 angeordnet sein.

Bei der in der Figur 4 dargestellten Windkraftanlage 1 ist der Permanentmagnet-Generator 7 in der Nabe 3 angeordnet. Der Stator 9 mit den Permanentmagneten 10 ist hier auf einer Hilfswelle 19 drehfest angeordnet, die an ihrem rückseitigen Ende 20 starr an einem Maschinenträger 21 der in der Zeichnung nicht dargestellten Gondel befestigt ist. Die Hilfswelle 19 ist durch eine als Hohlwelle ausgebildete Rotorwelle 22 hindurchgeführt. Die Rotorwelle 22 ist in dem Lager 5 und in dem Getriebe 6 drehbar gelagert. Über das Getriebe 6 wird der in der Zeichnung nicht dargestellte Generator zur Stromerzeugung angetrieben.

Sofern die Nabe 3 von den hier in der Zeichnung nicht dargestellten Rotorblättern angetrieben rotiert, so rotiert auch die in der Nabe 3 drehfest angeordnete Drehstromwicklung 8 innerhalb des Magnetfeldes der Permanentmagneten 10. Es wird so elektrische Energie erzeugt, auf die im Notfall zum Antrieb der hier nicht dargestellten Kurzschlußläufer in der bereits beschriebenen Weise zurückgegriffen werden kann. Grundsätzlich ist es auch möglich, in der Nabe 3 mehrere Permanentmagnet-Generatoren 7 anzuordnen, die mehreren Kurzschlußläufern zugeordnet sind. Grundsätzlich kann auch hier zusätzlich ein Getriebe angeordnet sein, über das die Hilfswelle 19 gegenläufig zur Drehung der Nabe 3 angetrieben wird. Es ergibt sich dann der Effekt, daß sich eine größere elektrische Leistung erzielen läßt bzw. daß die Abmessungen der Permanentmagnet-Generatoren 7 kleiner gehalten werden können. Alternativ kann dieses Getriebe auch zwischen der feststehenden Hilfswelle 19 und dem Stator 9 angeordnet sein.

## Patentansprüche

1. Vorrichtung zum Verstellen der Anstellwinkel der auf einer Nabe (3) einer Rotorwelle (2, 22) verdrehbar angeordneten Rotorblätter (4) einer Windkraftanlage (1) mittels Elektromotoren, wobei die Rotorblätter (4) durch Schließen eines in einem Notstromkreis (7, 12, 14) mit einer unabhängigen Energiequelle angeordneten Schützes (15) in ihre Fahnenstellung drehbar sind, dadurch gekennzeichnet, daß im Notstromkreis (7, 12, 14) als Energiequelle wenigstens ein der Rotorwelle (2, 22) zugeordneter Permanentmagnet-Generator (7) angeordnet ist und daß die Elektromotoren als Kurzschlußläufer (14) ausgebildet sind, wobei das Drehfeld des im Permanentmagnet-Generator (7) erzeugten Drehstromes derart mit den Kurzschlußläufern (14) verschaltet ist, daß diese die Rotorblätter (4) in ihre Fahnenstellung drehen.

2. Vorrichtung nach Anspruch 1, dadurch gekennzeichnet, daß jedem Kurzschlußläufer (14) ein separater Notstromkreis (7, 12, 14) zugeordnet ist.

3. Vorrichtung nach Anspruch 1, dadurch gekennzeichnet, daß der Permanentmagnet-Generator (7) eine mit der Rotorwelle (2) rotierende Drehstromwicklung (8) aufweist, um die in einem Stator (9) ringförmig Permanentmagneten (10) angeordnet sind.

4. Vorrichtung nach Anspruch 3, dadurch gekennzeichnet, daß der Stator (9) des Permanentmagnet-Generators (7) drehbar angeordnet und über ein Getriebe mit der Rotorwelle (2) verbunden ist, derart, daß der Stator (9) eine Rotationsbewegung ausführt und die Geschwindigkeit der Relativbewegung der Drehstromwicklung (8) zu den Permanentmagneten (10) erhöht wird.

5. Vorrichtung nach Anspruch 3, dadurch gekennzeichnet, daß der Permanentmagnet-Generator (7) in der Nabe (3) der Rotorwelle (2) angeordnet ist.

6. Vorrichtung nach Anspruch 5, dadurch gekennzeichnet, daß die Drehstromwicklung (8) des Permanentmagnet-Generators (7) zentrisch in der Nabe (3) der Rotorwelle (22) mit dieser umlaufend angeordnet ist und daß der Stator in der Nabe (3) auf einer durch eine als Hohlwelle ausgebildete Rotorwelle (22) hindurchgeführten Hilfswelle angeordnet ist, die an ihrem freien Ende drehfest gehalten ist.
